# EUROPEAN PATENT APPLICATION

(11) **EP 4 797 806 A1**
(43) Date of publication of application: **26.08.2026**
(21) Application number: 23956159.0
(22) Date of filing: 20.10.2023
(51) Int. Cl.: H04W 52/02, H04W 16/32, H04W 56/00, H04W 88/06

(54) **TERMINAL, BASE STATION, AND COMMUNICATION METHOD**

(71) Applicant: NTT DOCOMO, INC., Tokyo 100-6150 (JP)
(72) Inventor: TAKEDA, Daiki, Tokyo 100-6150 (JP); OKAMURA, Masaya, Tokyo 100-6150 (JP); HIRANO, Rio, Tokyo 100-6150 (JP)
(74) Representative: Hoffmann Eitle
(86) International application number: PCT/JP2023/038096
(87) International publication number: WO 2025/083913

(57) **Abstract**

A terminal includes: a control unit configured to expect that at least one of a low power wake-up signal or a synchronization signal of the low power wake-up signal used in a first radio access technology is to be transmitted from a base station according to a second radio access technology; and a reception unit configured to receive, from the base station, at least one of the low power wake-up signal or the synchronization signal of the low power wake-up signal transmitted according to the second radio access technology.

## Description

### TECHNICAL FIELD

The present invention relates to a terminal, a base station, and a communication method in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Literature 1 and Non-Patent Literature 2).

### CITATION LIST

### Non-Patent Literature

Non-Patent Literature 1: 3GPP TS 38.300 V17.3.0 (2022-12)
Non-Patent Literature 2: 3GPP TS 38.401 V17.3.0 (2022-12)

### SUMMARY OF INVENTION

### TECHNICAL PROBLEM

In 3GPP Rel-18, in order to further reduce energy consumption related to the conventional WUS (Wake Up Signal), a method that is referred to as LP (Low Power) - WUS/WUR (Wake Up Receiver) whose energy consumption is ultra low is being discussed. With respect to LP-WUS/WUR, the receiver is desired to be configured to consume as low power as possible.

However, in a case where a receiver with low power consumption is used, it is difficult to achieve characteristics with sufficient coverage.

In view of the above-described points, the present invention has been made to improve the coverage characteristics of a low power wake-up signal (LP-WUS) in the wireless communication system.

### SOLUTION TO PROBLEM

According to the disclosed technique, a terminal is provided. The terminal includes: a control unit configured to expect that at least one of a low power wake-up signal or a synchronization signal of the low power wake-up signal used in a first radio access technology is to be transmitted from a base station according to a second radio access technology; and a reception unit configured to receive, from the base station, at least one of the low power wake-up signal or the synchronization signal of the low power wake-up signal transmitted according to the second radio access technology.

### ADVANTAGEOUS EFFECTS OF INVENTION

According to the disclosed technique, coverage characteristics of the low power wake-up signal (LP-WUS) can be improved in the wireless communication system.

### BRIEF DESCRIPTION OF DRAWINGS

[Fig. 1] is a drawing for describing a wireless communication system in an embodiment of the present invention.
[Fig. 2] is a drawing for describing a wireless communication system in an embodiment of the present invention.
[Fig. 3] is a drawing for describing communications using LP-WUS and LP-WUR in an embodiment of the present invention.
[Fig. 4] is a drawing for describing communications using LP-WUS and LP-WUR in an embodiment of the present invention.
[Fig. 5] is a drawing for describing a transmission method of LP-WUS in an embodiment of the present invention.
[Fig. 6] is a drawing for describing a transmission method of LP-WUS in an embodiment of the present invention.
[Fig. 7] is a drawing for describing a format of LP-WUS in an embodiment of the present invention.
[Fig. 8] is a drawing for describing a first example of LP-WUS coverage configuration.
[Fig. 9] is a drawing for describing a second example of LP-WUS coverage configuration.
[Fig. 10] is a drawing for describing a first example of LP-WUS coverage configuration in an embodiment of the present invention.
[Fig. 11] is a drawing for describing a second example of LP-WUS coverage configuration in an embodiment of the present invention.
[Fig. 12] is a drawing for describing a third example of LP-WUS coverage configuration in an embodiment of the present invention.
[Fig. 13] is a drawing for describing a fourth example of LP-WUS coverage configuration in an embodiment of the present invention.
[Fig. 14] is a drawing for describing a fifth example of LP-WUS coverage configuration in an embodiment of the present invention.
[Fig. 15] is a drawing for describing a sixth example of LP-WUS coverage configuration in an embodiment of the present invention.
[Fig. 16] is a drawing for describing a seventh example of LP-WUS coverage configuration in an embodiment of the present invention.
[Fig. 17] is a drawing illustrating an example of a functional structure of a base station 10 in an embodiment of the present invention.
[Fig. 18] is a drawing illustrating an example of a functional configuration of a terminal 20 in an embodiment of the present invention.
[Fig. 19] is a drawing illustrating an example of a hardware structure of the base station 10 or the terminal 20 in an embodiment of the present invention.
[Fig. 20] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR will be described as SS, PSS, SSS, PBCH, PRACH, and the like without distinguishing from LTE.

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

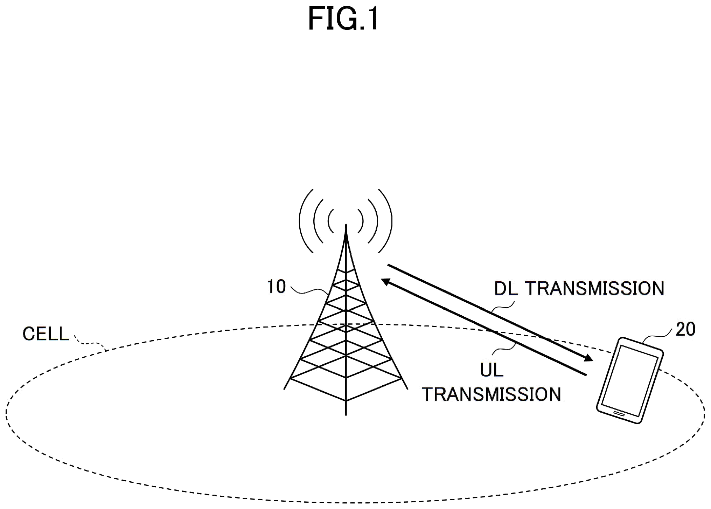

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, a PSS and/or a SSS. The system information may be transmitted via a PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

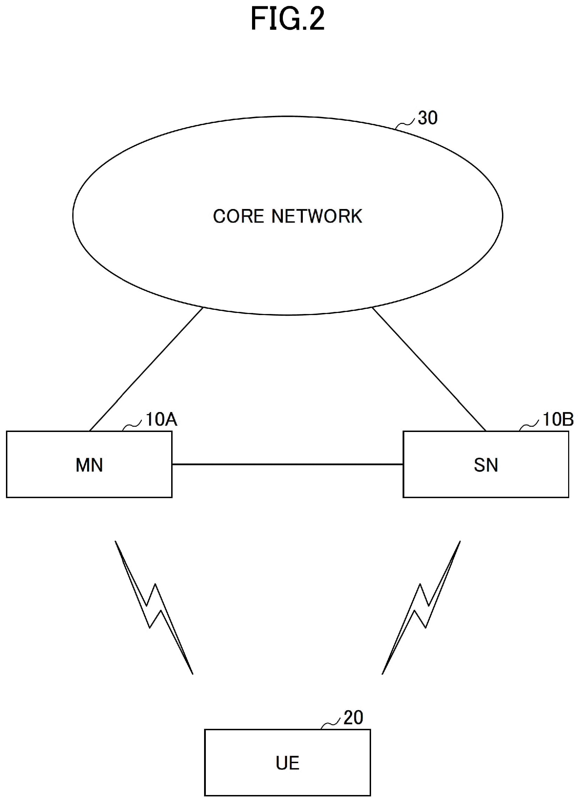

Fig. 2 is a drawing for describing a wireless communication system in an embodiment of the present invention. Fig. 2 shows an example of a configuration of a wireless communication system in a case where DC (Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCG Cell) and one or more SCells.

Processing operations in an embodiment of the present invention may be performed in a system configuration shown in Fig. 1, in a system configuration shown in Fig. 2, or in other system configurations. It is to be noted that "/" means "and/or" in the following description unless otherwise mentioned except for a case where different meaning is apparent from the context.

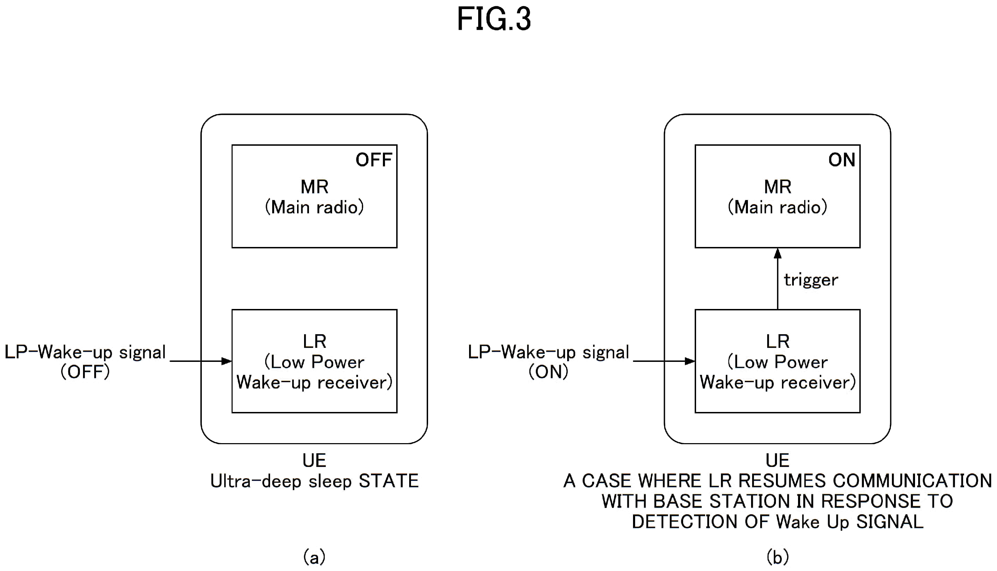

Fig. 3 is a drawing for describing communications using LP-WUS and LP-WUR in an embodiment of the present invention. In 3GPP (registered trademark) Rel-18, a technique for reducing energy consumption that is referred to as "Low-Power Wake Up Signal and Receiver" is being discussed. Low-Power Wake Up Signal is referred to as LP-WUS or is simply referred to as WUS, and Low-Power Wake UP Receiver is referred to as LP-WUR, WUR, or LR. As illustrated in (a) in Fig. 3, a state that is referred to as "Ultra-Deep Sleep" is implemented by operating, as a substitute for a Main Radio (MR) that is used for normal data communication, an LR that is a simple circuit operating with lower energy consumption than the MR. The LR may be used for triggering power OFF of the MR in response to reception of an LP-WUS signal by the LR as illustrated in (a) in Fig. 3, or the LR may have a function of triggering power ON of the MR as illustrated in (b) in Fig. 3.

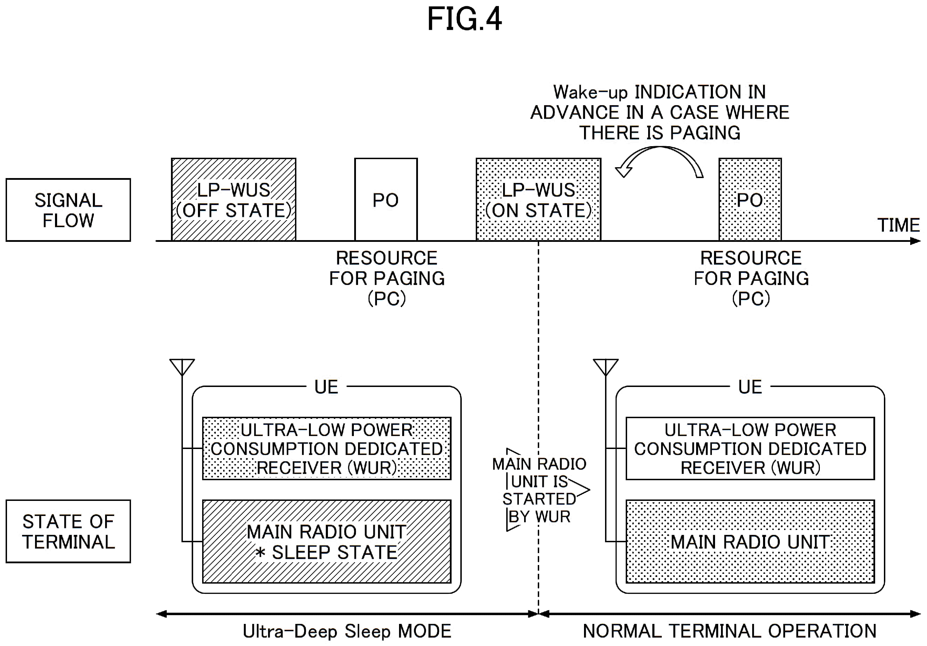

Fig. 4 is a drawing for describing communications using LP-WUS and LP-WUR in an embodiment of the present invention. In 3GPP, details of a function that the LR should have are being discussed. Discussions are held on: which state, such as RRC IDLE, RRC CONNECTED, or the like, is to be a target of functional enhancement; is a function needed other than the function of monitoring LP-WUS and waking up MR; which MR function is to be substituted by LR in the Ultra-Deep sleep state (for example, an RRM function during the RRC IDLE state). As a promising candidate function currently under discussion, FIG. 4 illustrates an approach in which an LP-WUS including information indicating whether a PO is to be monitored is transmitted, an LR receives the LP-WUS and starts an MR, and subsequent PO monitoring processing is continued. Alternatively, after the MR is started, the RACH procedure such as PRACH transmission as an operation for RRC IDLE may be continued, or a PDCCH monitoring operation may be continued as an operation for RRC CONNECTED.

In addition, in 3GPP, discussions are held on: LP-WUS/WUR is to be applied to various types of devices; the low latency is to be satisfied; and the like.

### (First embodiment)

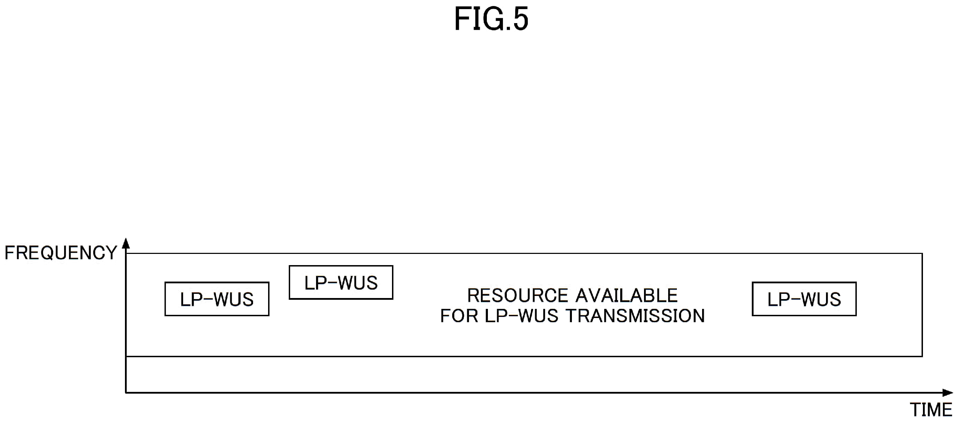

The first embodiment will be described. Fig. 5 is a drawing for describing a transmission method of LP-WUS in an embodiment of the present invention. In Fig. 5, the base station 10 configures configuration information including information related to a range of resources that can be used for LP-WUS transmission and transmits an LP-WUS to the terminal 20 at a necessary timing in the configured resource range, based on the configuration information. The terminal 20 configures resources used for LP-WUS reception, based on the configuration information, received from the base station 10, including information related to a range of resources that can be used for LP-WUS transmission, and receives an LP-WUS transmitted from the base station 10. Alternatively, the range of resources that can be used for LP-WUS transmission is not required to be configured for the terminal by the base station, the terminal may request the receivable resource range to the base station, or a unique range or a plurality of candidates may be specified in the technical specification of the standard. The LP-WUS transmitted in Fig. 5 is, for example, a signal that explicitly or implicitly indicates an indication related to triggering power ON or power OFF of MR.

In addition, the LP-WUS may include information related to the terminal identifier (UE_ID) indicating the indicated target terminal 20 or related to the terminal group identifier (UE_group_ID) indicating the indicated target group of terminals 20, and the LP-WUS may indicate a plurality of UE_IDs or a plurality of UE_group_IDs. Furthermore, the multiplexed LP-WUS in which single LP-WUSs are multiplexed may be generated and transmitted by using the time division multiplexing (TDM), the frequency division multiplexing (FDM), and the code division multiplexing (CDM). The above-described indicated target of the LP-WUS and features related to multiplexing may be applied to all of the following embodiments.

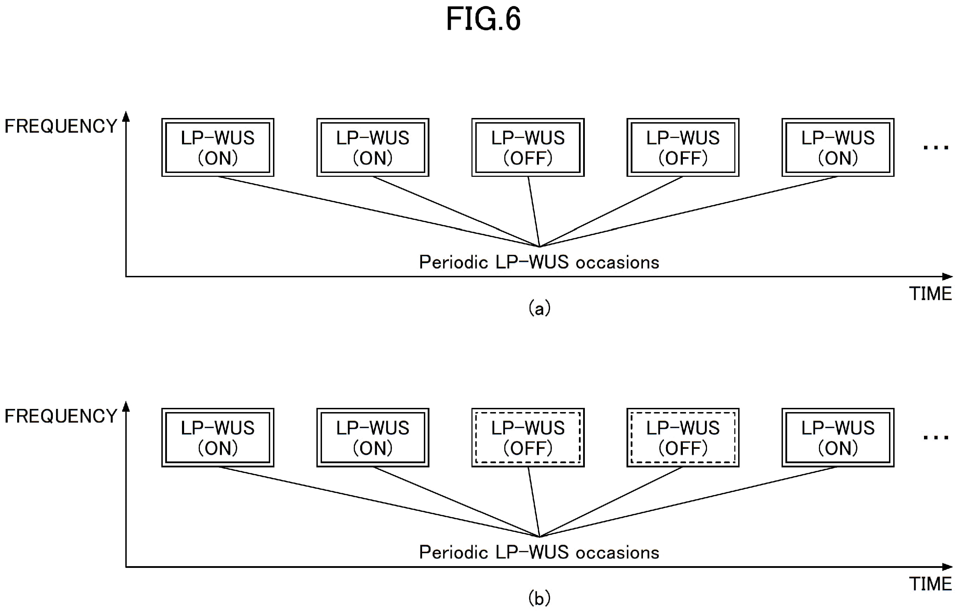

Fig. 6 is a drawing for describing a transmission method of LP-WUS in an embodiment of the present invention. In Fig. 6, the base station 10 configures configuration information including information related to LP-WUS occasions and transmits an LP-WUS to the terminal 20 at a necessary timing in the configured resource range, based on the configuration information. For example, the LP-WUS occasions has a constant time period. The terminal 20 configures resources used for LP-WUS reception, based on the configuration information, received from the base station 10, including information related to LP-WUS occasions, and receives an LP-WUS transmitted from the base station 10. In Fig. 6, not only an LP-WUS (ON) used for indicating a wake-up (power ON) of MR, but also an LP-WUS (OFF) used for indicating a non wake-up (non power ON) of MR, may be transmitted. The LP-WUS (OFF) may be an indication of continued power OFF. Here, as illustrated in (a) in Fig. 6, the base station 10 may transmit an LP-WUS (LP-WUS (ON) or LP-WUS (OFF)) in all occasions available for LP-WUS transmission. Alternatively, as another transmission method, as illustrated in (b) in Fig. 6, the base station 10 may transmit an LP-WUS only in necessary occasions available for LP-WUS transmission. In (b) in Fig. 6, the base station 10 transmits an LP-WUS (ON) that is indicated by a solid-line rectangular, and does not transmit an LP-WUS (OFF) that is indicated by a dotted-line rectangular.

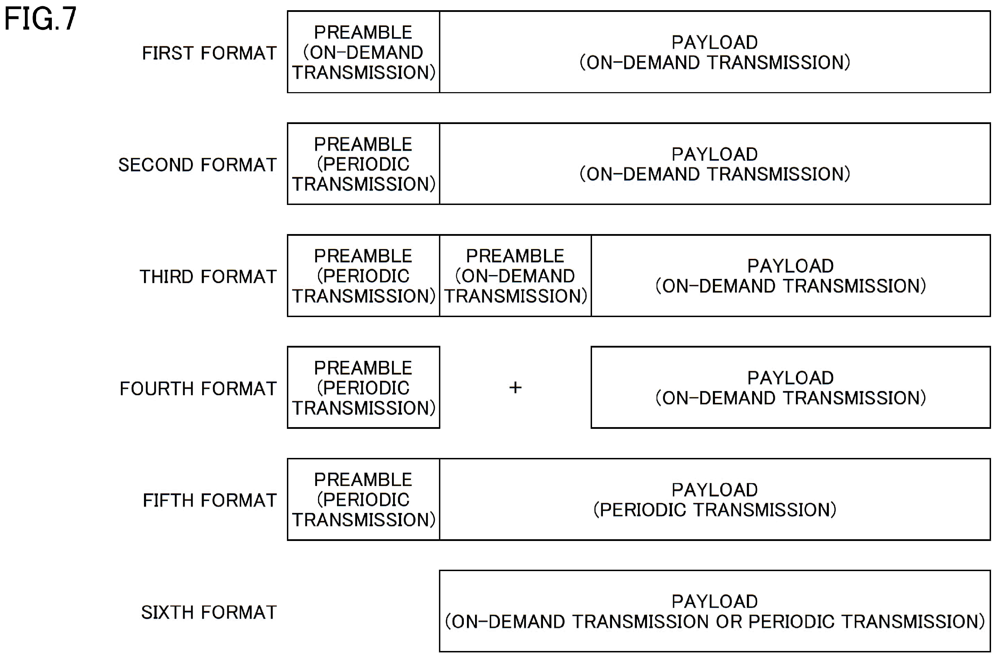

Fig. 7 is a drawing for describing a format of LP-WUS in an embodiment of the present invention. Fig. 7 illustrates five types of LP-WUS formats including a preamble and a payload. In an embodiment of the present invention, one type of format may be used, or a plurality of types of formats may be used. The preamble is a signal used by the terminal 20 for detecting an LP-WUS. The payload includes, for example: information indicating an indication of wake-up (power ON of MR as described above; information indicating an indication of non wake-up (non power ON) of MR; and information related to a terminal identifier (UE_ID) indicating the indicated target terminal 20 and a terminal group identifier (UE_group_ID) indicating the indicated target group of terminals 20. Hereinafter, each format will be described.

With the first format, a preamble and a payload are transmitted on demand. "On demand" may mean a timing of requesting wake-up of MR by the base station 10, or may mean a timing of an irregular occasion of LP-WUS transmission. The same applies to the following descriptions.

With the second format, preambles are periodically transmitted and a payload is transmitted on demand.

With the third format, after periodical preamble transmissions, another preamble and payload are transmitted on demand.

With the fourth format, periodically transmitted preambles and a payload that is transmitted on demand are each transmitted as separate signals. A preamble that is a separate signal may be referred to as an LP-SS (Low Power - Synchronization Signal), a low power synchronization signal, or the like.

With the fifth format, preambles and payloads are periodically transmitted.

With the sixth format, only payloads are transmitted. For example, in a case where synchronization has already been established by using a synchronization signal such as an NR SSB, only payloads are transmitted without preamble transmission.

### (LP-WUR configuration)

As a configuration of a detection unit for an LP-WUR, radio frequency (RF) envelope detection, heterodyne architecture with intermediate frequency (IF) envelope detection, homodyne/zero-IF architecture with baseband envelope detection, frequency shift keying (FSK) receiver, orthogonal frequency division multiple access (OFDMA) -based signals/channels detection, or the like can be used.

Here, the LP-WUR is desired to have a configuration with as low energy consumption as possible. However, in a case where a receiver with low energy consumption is used (for example, radio frequency (FR) envelope detection), sensitivity characteristics of the receiver are poor, and thus, it is difficult to achieve a coverage that is equivalent to the existing network (for example, 5G).

### (Conventional coverage enhancement method)

The conventional coverage enhancement method used for compensating for the sensitivity of the receiver includes boosting of transmission power, rate reduction (reduced amount of information transmitted by an LP-WUS), resource enhancement provided for transmission (for example, enhancement of the bandwidth and the number of symbols for an LP-WUS), LP-WUS transmission repetition, beamforming, or the like.

However, in a case where the conventional coverage enhancement is applied to an LP-WUS, several problems are expected to occur. For example, with respect to the boosting of transmission power, there is a restriction for the maximum transmission power of an LP-WUS, and thus, there is a problem that the operation will be restricted due to the bandwidth occupied by an LP-WUS, multiplexing with other NR signals/channels, or the like.

In addition, with respect to the rate reduction, the reduced amount of information of an LP-WUS is not necessarily effective for reduction of energy consumption. For example, wake-up indications can be individually transmitted to the target terminals by increasing the amount of information of an LP-WUS, and thus, with respect to terminals other than the target terminals, unwanted wake-ups can be avoided and the energy consumption can be reduced. As described above, when various use cases are taken into account for the LP-WUS design, it is difficult to obtain benefits of coverage enhancement by simply reducing the rate.

In addition, with respect to the resource enhancement provided for transmission, the LP-WUS transmission repetition, and the beamforming, there are problems of increased overhead, increased receiver complexity, and the increased energy consumption and increased process delay in accordance with the increased complexity.

### (Embodiment)

Embodiment(s) will be described. In an embodiment of the present invention, a method of improving the coverage characteristics of the low power wake-up signal (LP-WUS) in the wireless communication system will be described.

In an embodiment of the present invention, in a case where the terminal 20 transitions to a state in which only a limited operation can be performed (a sleep state such as an Ultra-deep sleep state) and cannot perform a specific operation, a low power wake-up signal is used that implements a part or all of the functions of reducing the energy consumption and delay of the terminal 20 by causing the terminal 20 to recover from the state based on a wake-up indication from the base station 10. Here, the low power wake-up signal may be simply referred to as a wake-up signal.

In addition, the wake-up signal may include a signal that has a function of a wake-up indication for the terminal 20 (for example, LP-WUS) and a signal that has a function for time and/or frequency synchronization or a signal that has a function for providing an operation of cell quality measurement (for example, LP-SS), or a single signal having both functions may be specified.

With respect to the above-described functions of reducing the energy consumption and delay, the terminal 20 may receive all of or a part of LP-WUS and LP-SS from another cell (secondary cell, etc.) that uses a radio access technology (RAT) and/or a frequency that are/is different from that of the cell of the terminal 20 itself (the cell of the base station 10 to which the terminal 20 is connected).

In addition, the terminal 20 may expect to perform a detection operation in which LP-WUS and LP-SS received via the cell of the terminal 20 itself and additional LP-WUS and LP-SS received via another cell are combined. In this case, the base station 10 of the another cell may transmit all of or a part of the additional LP-WUS and LP-SS by using a different radio access technology and/or frequency.

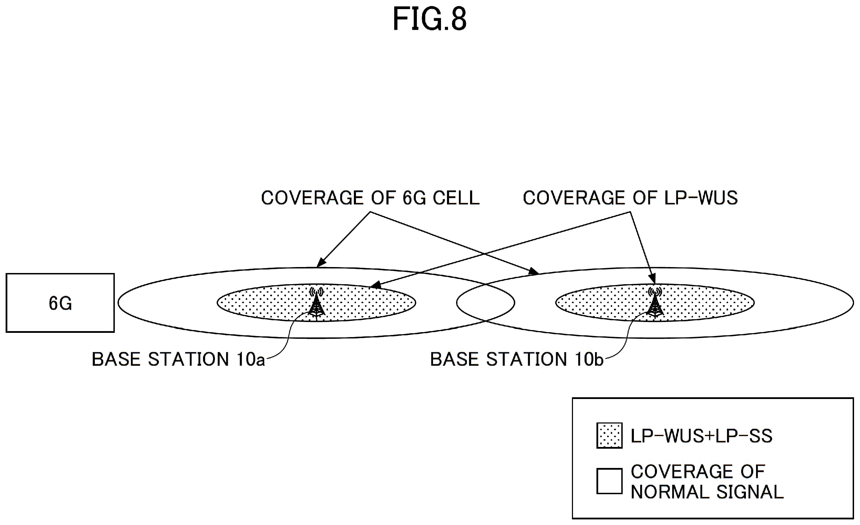

Fig. 8 is a drawing for describing a first example of LP-WUS coverage configuration. As illustrated in Fig. 8, the current LP-WUS coverage is expected to be narrower than the 6G cell coverage and the coverage characteristics are poor, and thus, there is a possibility that the adjacent cell judgement cannot be performed. Here, the LP-WUS coverage means a range in which LP-WUS can be received, and the 6G cell coverage means a range in which normal 6G signals (signals that are not a signal used for low power consumption such as LP-WUS) can be received.

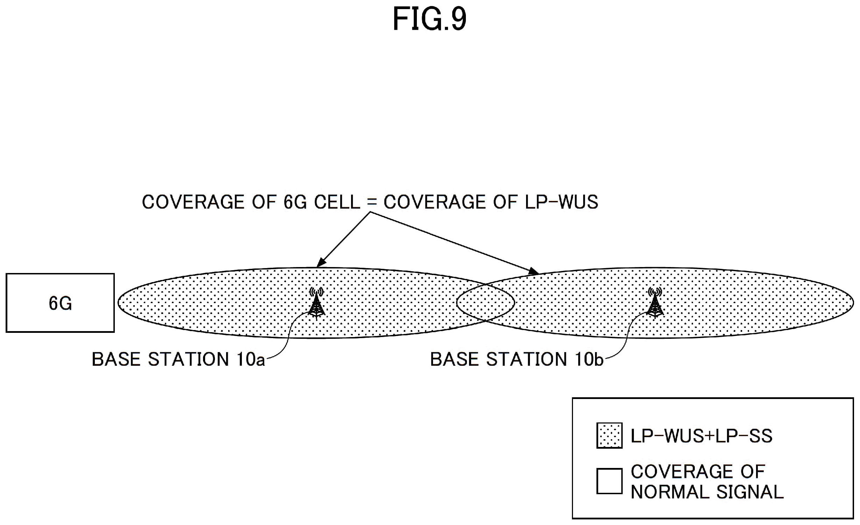

Fig. 9 is a drawing for describing a second example of LP-WUS coverage configuration. As illustrated in Fig. 9, it is desirable that the LP-WUS coverage becomes equivalent to the 6G coverage (normal signal coverage) by applying the above-described conventional enhancement of the coverage with respect to LP-WUS. However, in a case where the conventional coverage enhancement is applied to LP-WUS, the occurrence of the above-described problems needs to be taken into account.

### (Embodiment 1)

Embodiment 1 will be described. In embodiment 1, the terminal 20 may expect that a 6G LP-WUS (or LP-WUS and LP-SS) is (are) to be transmitted from the base station 10 by using a low frequency band such as 4G and/or 5G, that is, a radio access technology (RAT) whose coverage characteristics are better than the characteristics of 6G with a high frequency band Here, in a case where an LP-WUS is specified as a signal for indicating paging for an IDLE or INACTIVE state, the narrow coverage of an LP-WUS can be enhanced to a full coverage (a coverage that is equivalent to the coverage of normal signals) by indicating the paging of 6G cell by using 4G and/or 5G.

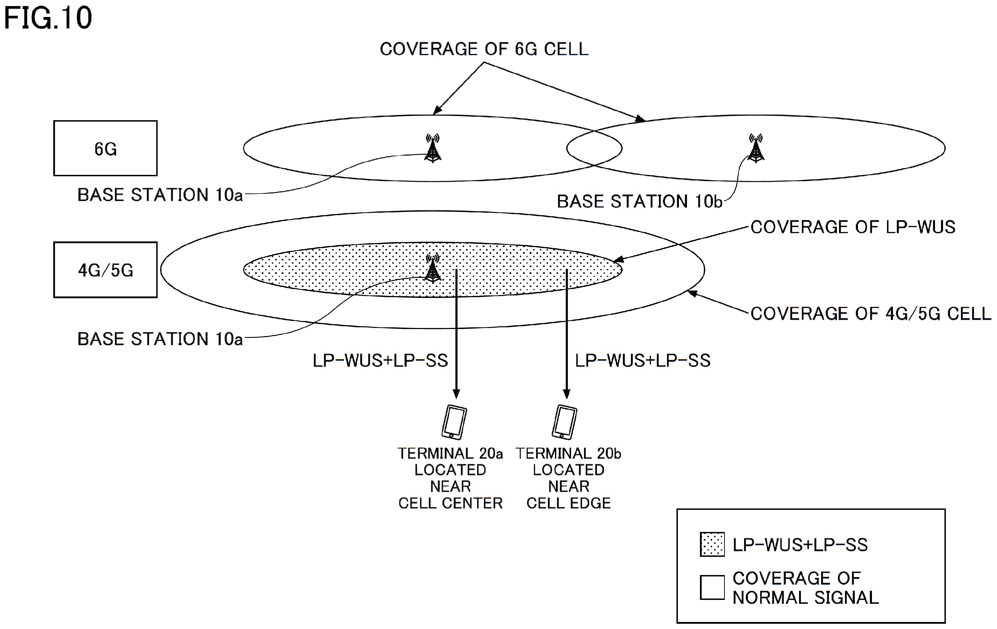

Fig. 10 is a drawing for describing a first example of LP-WUS coverage configuration in an embodiment of the present invention. In Fig. 10, although the 6G cell coverage and the 4G/5G cell coverage are illustrated separately in the upper part and the lower part in Fig. 10, respectively, in order to avoid overlapping in the drawing, the two cell coverages are actually located in the same place centered around the base station 10a. As illustrated in Fig. 10, the terminals 20 (20a and 20b) receive 6G LP-WUS and LP-SS from the base station 10a by using the 4G and/or 5G RAT. The base station 10a that uses the 4G and/or 5G RAT and the 6G RAT may be two different base stations 10 (for example, 10c and 10d). The same applies to the subsequent drawings. It is to be noted that both LP-WUS and LP-SS are not required to be transmitted, and LP-WUS alone may be transmitted. Here, the LP-WUS cell coverage of 4G and/or 5G whose frequency band is lower than that of 6G is a coverage that is equivalent to the 6G cell overage (a range in which normal 6G signals can be received). In other words, the coverage characteristics are improved because a wake-up signal can be received not only by a terminal 20a that is located near the cell center but also by a terminal 20b that is located near the cell edge.

### (Embodiment 2)

Embodiment 2 will be described. In embodiment 2, the terminal 20 may expect that a 6G LP-WUS (or LP-WUS and LP-SS) is (are) to be transmitted by the base station 10 by using the 6G RAT and that a 6G LP-WUS (or LP-WUS and LP-SS) is (are) to be transmitted by the base station 10 in a supplementary manner by using the 4G and/or 5G RAT, for example.

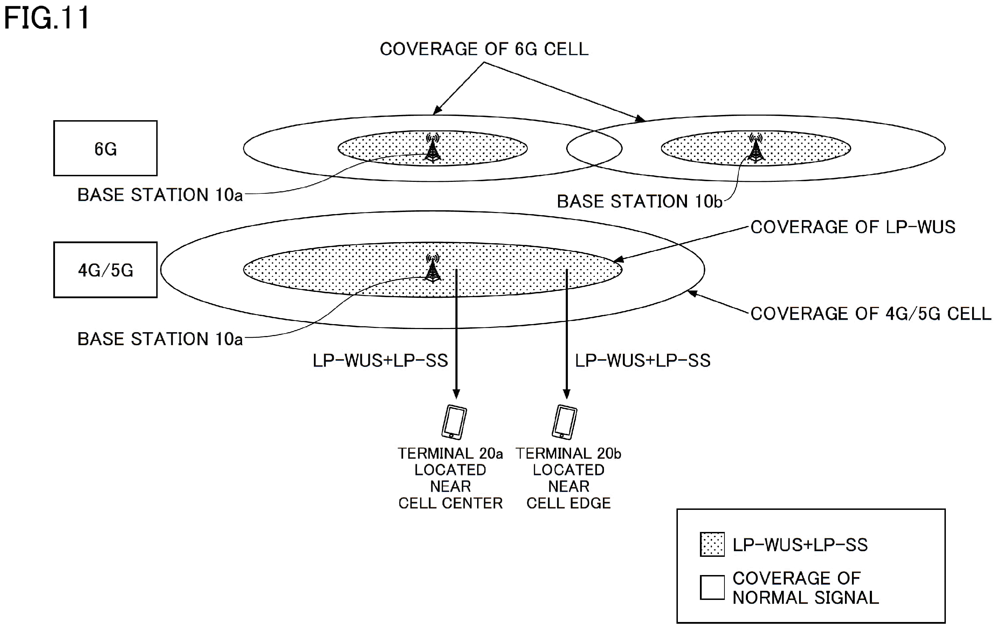

Fig. 11 is a drawing for describing a second example of LP-WUS coverage configuration in an embodiment of the present invention. As illustrated in Fig. 11, the terminals 20 (20a and 20b) receive 6G LP-WUS and LP-SS from the base station 10a by using the 6G RAT and receive 6G LP-WUS and LP-SS from the base station 10a in a supplementary manner by using the 4G and/or 5G RAT. It is to be noted that both LP-WUS and LP-SS are not required to be transmitted, and LP-WUS alone may be transmitted. Here, the LP-WUS cell coverage of 4G and/or 5G whose frequency band is lower than that of 6G is a coverage that is equivalent to the 6G cell overage (a range in which normal 6G signals can be received). In other words, the coverage characteristics are improved because a wake-up signal can be received not only by a terminal 20a that is located near the cell center but also by a terminal 20b that is located near the cell edge.

### (Embodiment 3)

Embodiment 3 will be described. In embodiment 3, the terminal 20 may expect that an LP-WUS (or LP-WUS and LP-SS) of a freely-selected second network (4G, 5G, 6G, etc.) is (are) to be transmitted by the base station 10 by using a RAT of the freely-selected first network (4G, 5G, 6G, etc.). Here, the combination of the first network and the second network may be freely selected.

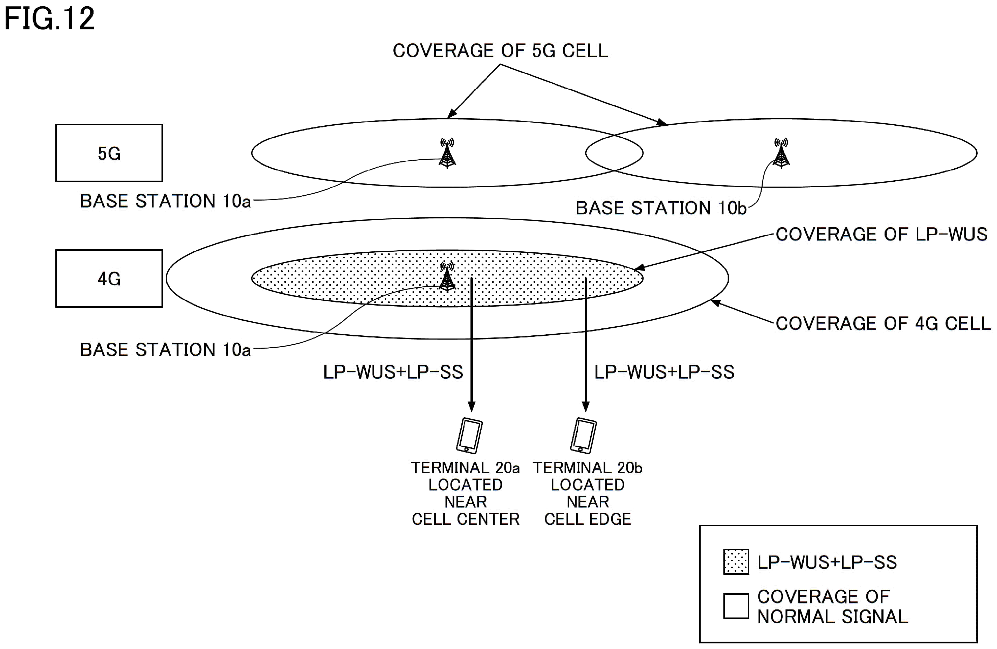

Fig. 12 is a drawing for describing a third example of LP-WUS coverage configuration in an embodiment of the present invention. As an example of the combination, as illustrated in Fig. 12, the terminals 20 (20a and 20b) receive 5G LP-WUS and LP-SS from the base station 10a by using the 4G RAT. It is to be noted that both LP-WUS and LP-SS are not required to be transmitted, and LP-WUS alone may be transmitted. Here, the LP-WUS cell coverage of 4G whose frequency band is lower than that of 5G is a coverage that is equivalent to the 5G cell overage (a range in which normal 5G signals can be received). In other words, the coverage characteristics are improved because a wake-up signal can be received not only by a terminal 20a that is located near the cell center but also by a terminal 20b that is located near the cell edge.

### (Embodiment 4)

Embodiment 4 will be described. In embodiment 4, the terminal 20 may expect that an LP-WUS (or LP-WUS and LP-SS) is (are) to be transmitted from the base station 10 by using a frequency band that is different from the frequency band used for receiving normal signals (signals other than the wake-up signal).

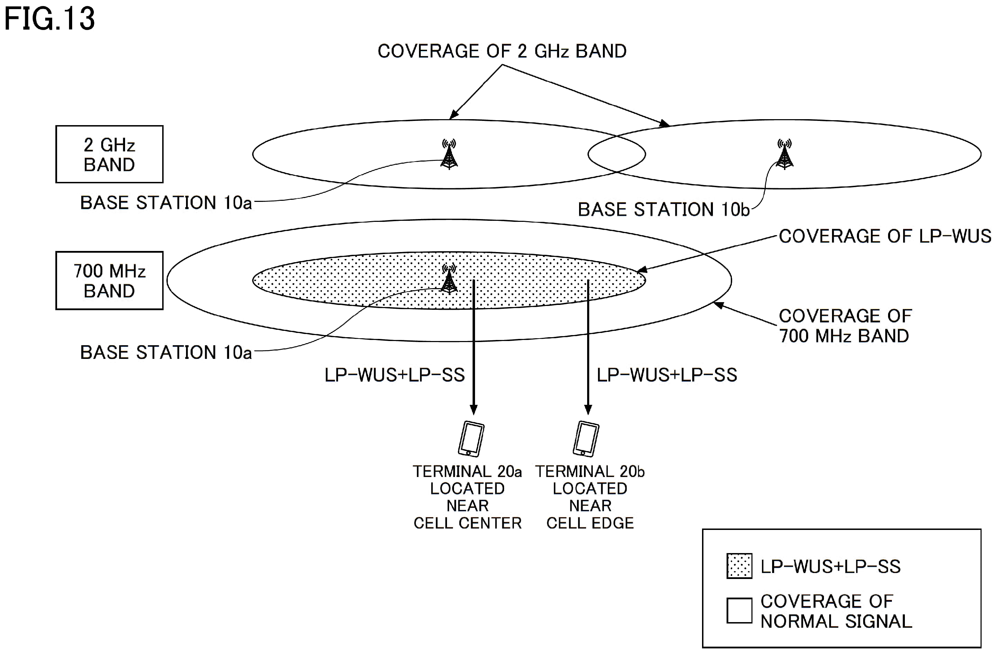

Fig. 13 is a drawing for describing a fourth example of LP-WUS coverage configuration in an embodiment of the present invention. As illustrated in Fig. 13, the terminals 20 (20a and 20b) receive 5G LP-WUS and LP-SS from the base station 10a by using a frequency band (700 MHz) that is different from the frequency band used for receiving normal signals (2 GHz). It is to be noted that both LP-WUS and LP-SS are not required to be transmitted, and LP-WUS alone may be transmitted. Here, the LP-WUS cell coverage of a frequency band of 700 MHz is equivalent to the cell overage of a frequency band of 2 GHz (a range in which normal signals can be received). In other words, the coverage characteristics are improved because not only a terminal 20a that is located near the cell center but also a terminal 20b that is located near the cell edge can receive a wake-up signal.

### (Embodiment 5)

Embodiment 5 will be described. In embodiment 5, the terminal 20 may expect that a part of signals included in a wake-up signal is to be transmitted by the base station 10 by using the 6G RAT, and that the remaining part of the signals included in a wake-up signal is to be transmitted by the base station 10 by using the 4G and/or 5G RAT.

For example, a part of signals included in a wake-up signal may be a signal (LP-WUS) including a part of a synchronization signal (LP-SS) of a wake-up signal and/or contents, and the remaining part of the signals included in a wake-up signal may be a signal (LP-WUS) including (the remaining) contents related to the wake-up signal.

In addition, the synchronization signal (LP-SS) that is a part included in the wake-up signal may be replaced by another synchronization signal (NR SSB, etc.), a reference signal (de-modulation reference signal (DMRS) or a channel state information reference signal (CSI (channel state information) -RS), etc.

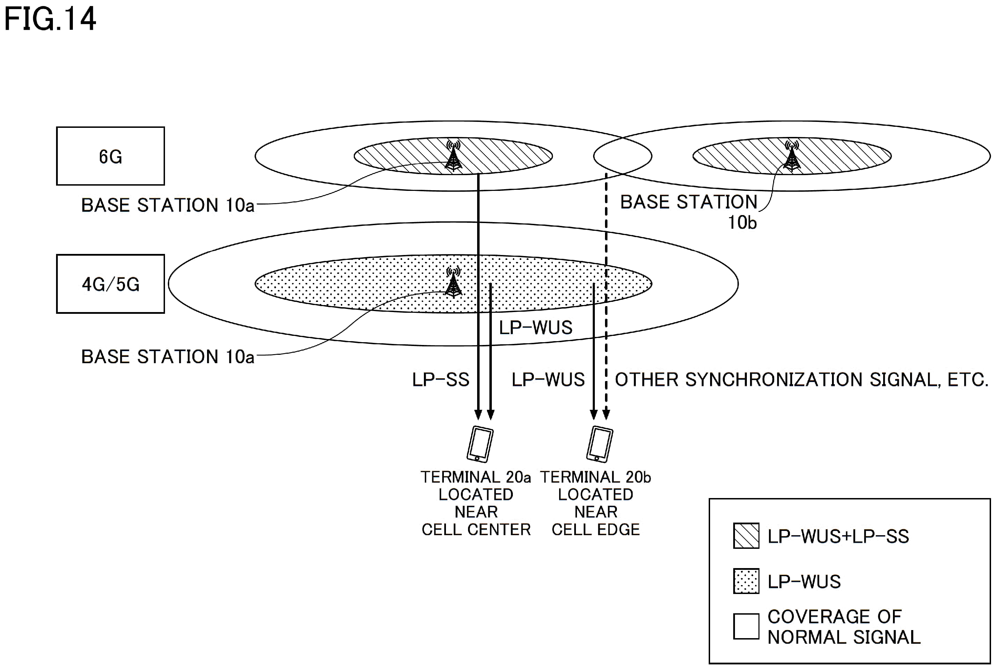

Fig. 14 is a drawing for describing a fifth example of LP-WUS coverage configuration in an embodiment of the present invention. As illustrated in Fig. 14, the terminal 20a that is located near the cell center receives an LP-WUS transmitted by the base station 10a by using the 4G and/or 5G RAT, and receives an LP-SS transmitted by the base station 10a by using the 6G RAT. Alternatively, the terminal 20a that is located near the cell center may receive an LP-WUS and an LP-SS that are transmitted by the base station 10a by using the 6G RAT. In addition, the terminal 20b that is located at the cell edge receives an LP-WUS that is transmitted by the base station 10a by using the 4G and/or 5G RAT, and receives another synchronization signal transmitted by the base station 10a by using the 6G RAT instead of receiving the synchronization signal (LP-SS). According to the above-described operation, the coverage characteristics are improved.

In addition, the terminal 20 may perform a synchronization operation and/or a cell quality measurement, based on at least one of a synchronization (LP-SS) of a low power wake-up signal or another synchronization signal (NR SSB, 6G synchronization signal, or the like). Here, the terminal 20 may select the synchronization signal, the synchronization method, and the cell quality measurement method that are to be used. Alternatively, the terminal 20 may indicate, to the base station 10, the terminal capability related to the synchronization signal, the synchronization method, and the cell quality measurement method that are to be used. In addition, the base station 10 may determine the synchronization signal, the synchronization method, and the cell quality measurement method that are to be used, based on the terminal capability received from the terminal 20, and may indicate, to the terminal 20, the determined contents by using RRC, DCI, MAC CE, etc. In addition, the cell quality measurement may be measurement of the reference signal received power (RSRP, Reference Signal Reference Power), reference signal received quality (RSRQ, Reference Signal Received Quality), etc.

Furthermore, the terminal 20 may expect cell quality measurement results that are to be based on the used synchronization signal, synchronization method, and cell quality measurement method, and may transmit the cell quality measurement results to the base station 10.

### (Embodiment 6)

Embodiment 6 will be described. In embodiment 6, the base station 10 may transmit a part of the signals to the terminal 20 by applying the above-described conventional coverage enhancement to the part of the signals included in the wake-up signal. In addition, the terminal 20 may receive the part of the signals by expecting that the above-described conventional coverage enhancement is to be applied to a part of the signals included in the wake-up signal and the part of the signals is to be transmitted from the base station 10.

For example, the base station 10 may transmit the synchronization signal to the terminal 20 by applying the coverage enhancement using repeated transmission to the synchronization signal (LP-SS) of a low power wake-up signal. In addition, the terminal 20 may receive the synchronization signal by expecting that the synchronization signal (LP-SS) of a wake-up signal is to be transmitted from the base station 10 by using the coverage enhancement method using transmission of repetitions.

The low power wake-up signal (LP-WUS) is required to have low latency as an on-demand signal, and thus, it is not preferable to use the coverage enhancement using the transmission of repetitions. On the other hand, the synchronization signal (LP-SS) of a low power wake-up signal is not required to have low latency as an on-demand signal, and thus, there is no problem even if the coverage enhancement using the transmission of repetitions and the increased density of transmission period is used.

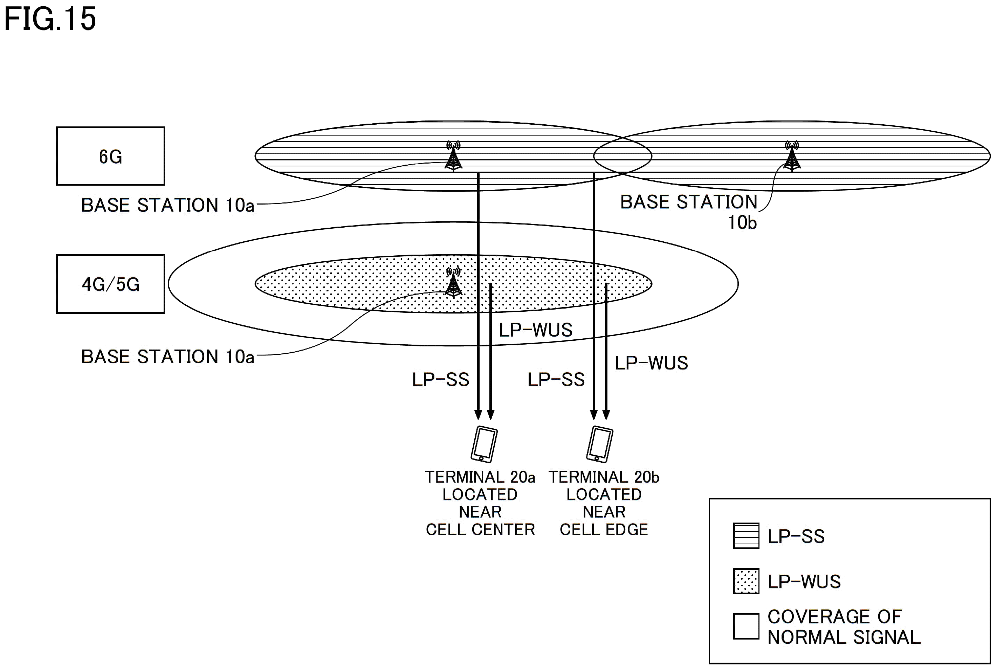

Fig. 15 is a drawing for describing a sixth example of LP-WUS coverage configuration in an embodiment of the present invention. As illustrated in Fig. 15, the base station 10a transmits a synchronization signal (LP-SS) of a low power wake-up signal to the terminals 20 (20a and 20b) by using the 6G RAT by applying the conventional coverage enhancement to the synchronization signal. In addition, the base station 10a transmits a low power wake-up signal (LP-WUS) to the terminals 20 (20a and 20b) by using the 4G and/or 5G RAT without using the coverage enhancement. The terminal 20b that is located at the cell edge can receive the low power wake-up signal (LP-WUS) and the synchronization signal (LP-SS) of the low power wake-up signal in the same manner as the terminal 20a that is located at the cell center, and thus, the coverage characteristics are improved.

### (Embodiment 7)

Embodiment 7 will be described. In embodiment 7, the above-described conventional coverage enhancement may be applied to the synchronization signal (LP-SS) of the low power wake-up signal in a RAT other than the 6G RAT.

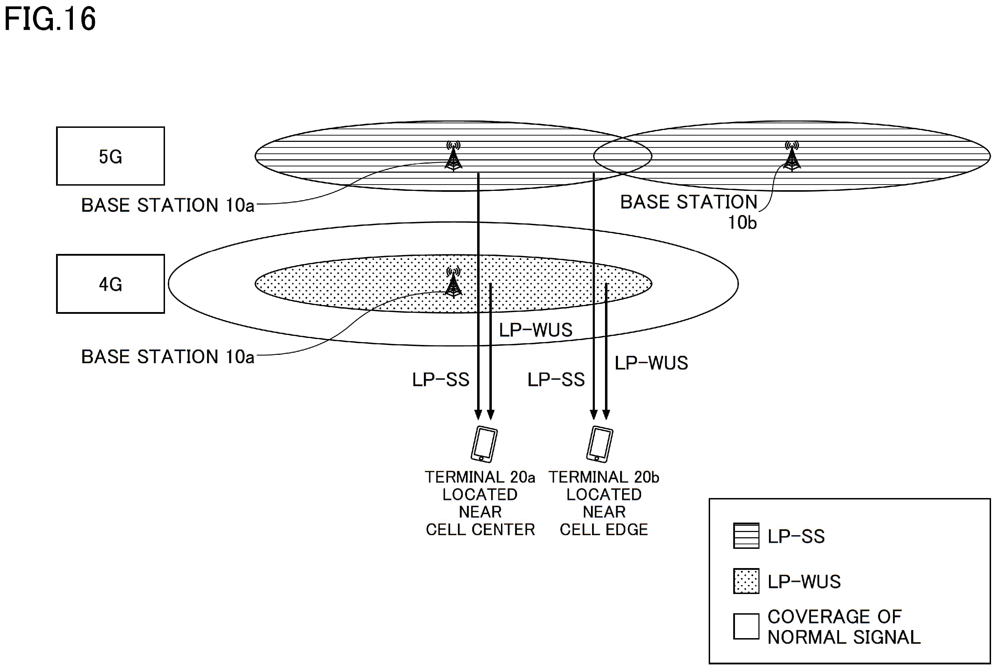

Fig. 16 is a drawing for describing a seventh example of LP-WUS coverage configuration in an embodiment of the present invention. As illustrated in Fig. 16, the base station 10a transmits a synchronization signal (LP-SS) of a low power wake-up signal to the terminals 20 (20a and 20b) by using the 5G RAT by applying the coverage enhancement to the synchronization signal. In addition, the base station 10a transmits a low power wake-up signal (LP-WUS) to the terminals 20 (20a and 20b) by using the 4G RAT without using the coverage enhancement. The terminal 20b that is located at the cell edge can receive the low power wake-up signal (LP-WUS) and the synchronization signal (LP-SS) of the low power wake-up signal in the same manner as the terminal 20a that is located at the cell center, and thus, the coverage characteristics are improved.

In an embodiment of the present invention, the base station 10 may indicate, to the terminal 20, information of LP-WUS and/or LP-SS that can be used or that can be used in a supplementary manner in addition to the information that is needed for the LP-WUS and/or the WUR operation for a cell of the base station 10 itself, by using RRC, DCI, MAC CE, etc. The information that is to be indicated includes at least, for example, information of a radio access technology (RAT) related to LP-WUS and/or LP-SS that can be used or that can used in a supplementary manner, information of the payload format, information of the sequence generation method, information of parameters used in the sequence generation method, information of the timing, period, and frequency related to the monitoring positions including the occasions in which LP-WUS can be transmitted, cell information (for example, frequency, cell identifier (ID), synchronization signal (SSB) positions, etc.), information indicating whether only LP-WUS can be used, information indicating whether only LP-SS can be used, and information indicating whether both LP-WUS and LP-SS can be used.

In addition, the terminal 20 may transmit, to the base station 10 as the terminal capability, at least one of information related to a radio access technology (RAT) related to LP-WUS and/or LP-SS, information of the payload format, information of the sequency generation method, information of parameters related to the sequence generation method, information of the timing, period, and frequency related to the monitoring positions including the occasions in which LP-WUS can be transmitted, cell information (for example, frequency, cell identifier (ID), synchronization signal (SSB) positions, etc.), information indicating whether only LP-WUS can be used, information indicating whether only LP-SS can be used, and information indicating whether both LP-WUS and LP-SS can be used. The base station 10 may determine the information of LP-WUS and/or LP-SS that can be used or that can be used in a supplementary manner based on the terminal capability received from the terminal 20, and may indicate the determined transmission method to the terminal 20 by using RRC, DCI, MAC CE, etc.

According to an embodiment of the present invention, coverage characteristics of the low power wake-up signal (LP-WUS) can be improved in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

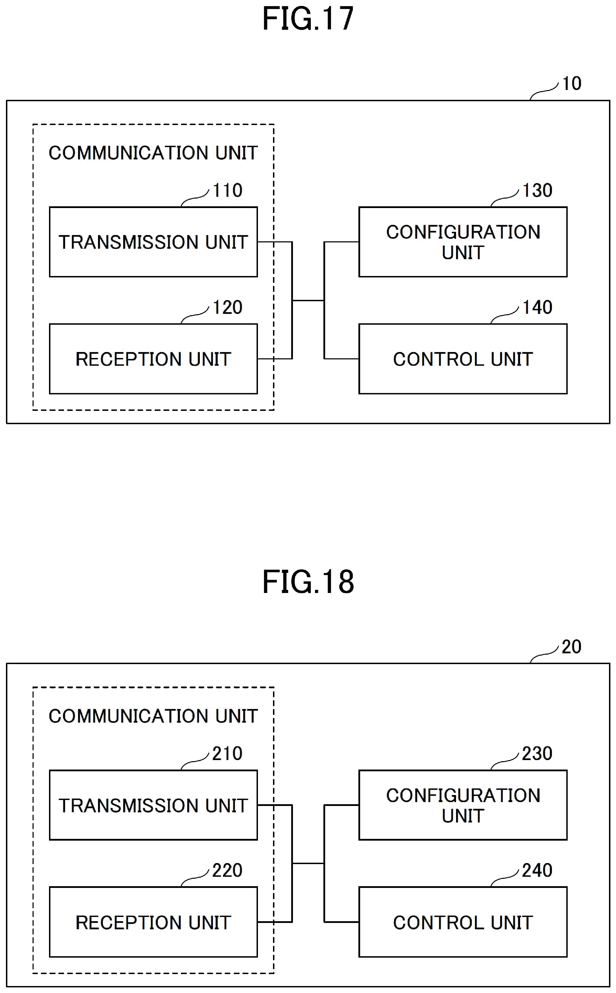

Fig. 17 is a drawing illustrating an example of a functional structure of a base station 10 according to an embodiment of the present invention. As shown in Fig. 17, the base station 10 includes a transmission unit 110, a reception unit 120, a configuration unit 130, and a control unit 140. The functional configuration illustrated in Fig. 17 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. In addition, the transmission unit 110 transmits, to the terminal 20, the configuration information, indication, notification, and the like related to the low power wake-up signal. In addition, the transmission unit 110 transmits, to the terminal, notification related to switching of the monitoring operation. The reception unit 120 includes a function for receiving various signals transmitted from the terminal 20 and acquiring, for example, information of a higher layer from the received signals. In addition, the transmission unit 110 has a function of transmitting PSS, SSS, PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the configuration information related to the paging notification information and the low power wake-up signal.

The control unit 140 performs control related to the configuration, command, and indication related to the low power wake-up signal, or the like as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 18 is a drawing illustrating an example of a functional structure of a terminal 20 according to an embodiment of the present invention. As shown in Fig. 18, the terminal 20 includes a transmission unit 210, a reception unit 220, a configuration unit 230, and a control unit 240. The functional configuration illustrated in Fig. 18 is merely an example. Functional divisions and names of functional units may be anything as long as operations according to an embodiment of the present invention can be performed. the transmission unit 210 and the reception unit 220 may be combined and may be referred to as a communication unit.

The transmission unit 210 generates a transmission signal from transmission data and transmits the transmission signal wirelessly. In addition, the transmission unit 210 transmits, to the base station 10, the capability information related to the low power wake-up signal. The reception unit 220 receives various signals wirelessly and obtains higher layer signals from the received physical layer signals. In addition, the reception unit 220 has a function of receiving PSS, SSS, PBCH, DL/UL/SL control signals, and the like, transmitted from the base station 10. In addition, the reception unit 220 receives, from the base station 10, configuration information, command, and indication related to the paging notification information and the low power wake-up signal. In addition, the reception unit 220 receives, from the base station 10, the low power wake-up signal. The configuration unit 230 stores various configuration information items received by the reception unit 220 from the base station 10. In addition, the configuration unit 230 also stores pre-configured configuration information. Contents of the configuration information are, for example, information related to the configuration information related to the paging notification information and the low power wake-up signal.

The control unit 240 performs configuration related to the low power wake-up signal as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 17 and Fig. 18) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

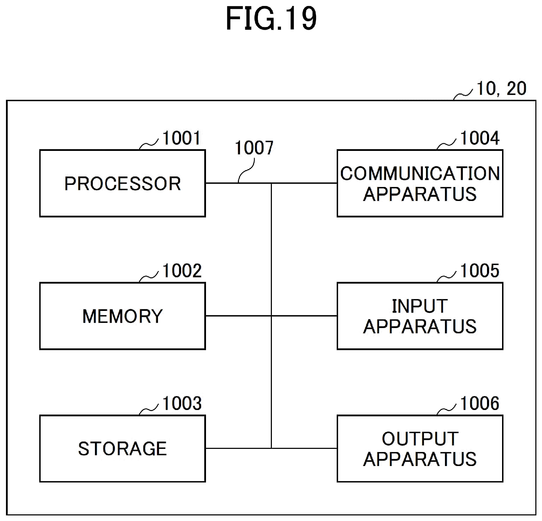

For example, the base station 10, the terminal 20, etc., according to an embodiment of the present disclosure may function as a computer for processing the radio communication method of the present disclosure. Fig. 19 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 or the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 17 may be implemented by control programs that are stored in the memory 1002 and that operate on the processor 1001. In addition, for example, the control unit 240 of the terminal 20 illustrated in Fig. 18 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

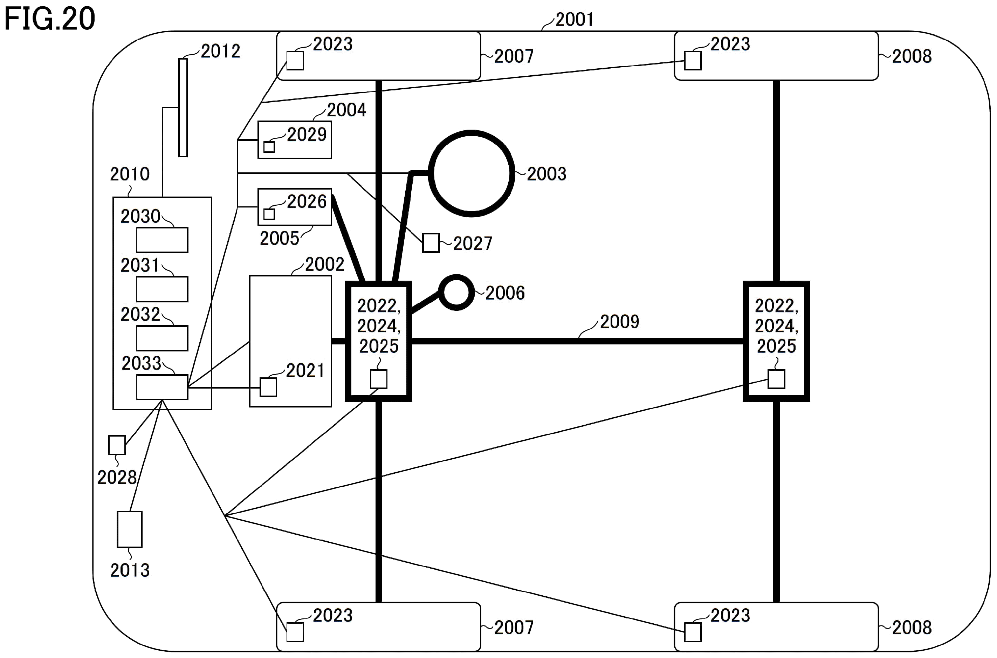

Fig. 20 shows an example of a configuration of a vehicle 2001. As shown in Fig. 20, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### <Configuration related to an embodiment of the present invention>

### (First item)

A terminal including:
a control unit configured to expect that at least one of a low power wake-up signal or a synchronization signal of the low power wake-up signal used in a first radio access technology is to be transmitted from a base station according to a second radio access technology; and
a reception unit configured to receive, from the base station, at least one of the low power wake-up signal or the synchronization signal of the low power wake-up signal transmitted according to the second radio access technology.

### (Second item)

The terminal as described in the first item, where
the reception unit receives configuration information from the base station, the configuration information being related to the low power wake-up signal and a synchronization signal of the low power wake-up signal that can be used or that can be used in a supplementary manner, the configuration information including at least one of:
information related to radio access technology;
information of payload format;
information of sequence generation method;
information of parameters for the sequence generation method;
information of timing, period, and frequency related to monitoring positions including occasions in which the low power wake-up signal can be transmitted;
cell information;
information indicating whether only the low power wake-up signal can be used;
information indicating whether only the synchronization signal of the low power wake-up signal can be used; or
information indicating whether both the low power wake-up signal and the synchronization signal of the low power wake-up signal can be used.

### (Third item)

The terminal as described in the first item, wherein
the control unit expects that a synchronization signal used in the first radio access technology other than the synchronization signal of the low power wake-up signal is to be available as a replacement of the synchronization signal of the low power wake-up signal.

### (Fourth item)

The terminal as described in the first item, wherein
the control unit expects that coverage enhancement based on repeated transmission is to be applied to a synchronization signal of the low power wake-up signal that is transmitted according to the first radio access technology, and
the reception unit receives the synchronization signal of the low power wake-up signal according to the first radio access technology and receives the low power wake-up signal according to the second radio access technology.

### (Fifth item)

A base station including:
a control unit configured to configure: information of a radio access technology related to a low power wake-up signal and a synchronization signal of the low power wake-up signal; and information of timing, period, and frequency related to monitoring positions including occasions in which the low power wake-up signal can be transmitted and cell information; and
a transmission unit configured to transmit at least one of the low power wake-up signal or a synchronization signal of the low power wake-up signal used in a first radio access technology according to a second radio access technology, based on the configuration.

### (Sixth item)

A communication method performed by a terminal, the communication method including:
expecting that at least one of a low power wake-up signal or a synchronization signal of the low power wake-up signal used in a first radio access technology is to be transmitted according to a second radio access technology; and
receiving at least one of the low power wake-up signal or the synchronization signal of the low power wake-up signal transmitted according to the second radio access technology.

According to any one of the above-described configurations, the coverage characteristics of the low power wake-up signal (LP-WUS) can be improved in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a control unit configured to expect that at least one of a low power wake-up signal or a synchronization signal of the low power wake-up signal used in a first radio access technology is to be transmitted from a base station according to a second radio access technology; and
a reception unit configured to receive, from the base station, at least one of the low power wake-up signal or the synchronization signal of the low power wake-up signal transmitted according to the second radio access technology.

2. The terminal as claimed in claim 1, wherein
the reception unit receives configuration information from the base station, the configuration information being related to the low power wake-up signal and a synchronization signal of the low power wake-up signal that can be used or that can be used in a supplementary manner, the configuration information including at least one of:
information related to radio access technology;
information of payload format;
information of sequence generation method;
information of parameters for the sequence generation method;
information of timing, period, and frequency related to monitoring positions including occasions in which the low power wake-up signal can be transmitted;
cell information;
information indicating whether only the low power wake-up signal can be used;
information indicating whether only the synchronization signal of the low power wake-up signal can be used; or
information indicating whether both the low power wake-up signal and the synchronization signal of the low power wake-up signal can be used.

3. The terminal as claimed in claim 1, wherein
the control unit expects that a synchronization signal used in the first radio access technology other than the synchronization signal of the low power wake-up signal is to be available as a replacement of the synchronization signal of the low power wake-up signal.

4. The terminal as claimed in claim 1, wherein
the control unit expects that coverage enhancement based on repeated transmission is to be applied to a synchronization signal of the low power wake-up signal that is transmitted according to the first radio access technology, and
the reception unit receives the synchronization signal of the low power wake-up signal according to the first radio access technology and receives the low power wake-up signal according to the second radio access technology.

5. A base station comprising:
a control unit configured to configure: information of a radio access technology related to a low power wake-up signal and a synchronization signal of the low power wake-up signal; and information of timing, period, and frequency related to monitoring positions including occasions in which the low power wake-up signal can be transmitted and cell information; and
a transmission unit configured to transmit at least one of the low power wake-up signal or a synchronization signal of the low power wake-up signal used in a first radio access technology according to a second radio access technology, based on the configuration.

6. A communication method performed by a terminal, the communication method comprising:
expecting that at least one of a low power wake-up signal or a synchronization signal of the low power wake-up signal used in a first radio access technology is to be transmitted according to a second radio access technology; and
receiving at least one of the low power wake-up signal or the synchronization signal of the low power wake-up signal transmitted according to the second radio access technology.
